# EUROPEAN PATENT APPLICATION

(11) **EP 4 847 640 A1**
(43) Date of publication of application: **02.12.2026**
(21) Application number: 26169395.6
(22) Date of filing: 31.03.2026
(51) Int. Cl.: C22B 1/00, C22B 7/00, C22B 15/00, C22B 21/00, H01M 10/54

(54) **SEPARATION LIQUID AND METHOD FOR RECOVERY OF METAL-INORGANIC COMPOSITE ELECTRODE ASSEMBLY**

(30) Priority: 30.05.2025 CN 202510719398
(71) Applicant: Rikomay Recycling Singapore Pte. Ltd., Singapore 308899 (SG)
(72) Inventor: PENG, Xiaoxi, Wuhan (CN); CAO, Yuancheng, Wuhan (CN); ZHANG, Xiaosong, Wuhan (CN); QIAN, Sheng, Wuhan (CN); LUO, Huxun, Wuhan (CN); ZHANG, Yu, Wuhan (CN); ZHENG, Tian, Wuhan (CN); LIAO, Hang, Wuhan (CN); HU, Fan, Wuhan (CN); ZHOU, Bin, Wuhan (CN)
(74) Representative: Vitina, Maruta

(57) **Abstract**

A separation liquid includes an active component and 95% or more by weight of deionized water, where the separation liquid has a pH of 0.5-2, and the active component is composed of oxalic acid and acetic acid in a weight ratio of 1:10-20. A method for recovery of a metal-inorganic composite electrode assembly is also provided, in which a spent lithium-ion battery is dismantled to obtain a cell; the cell is crushed and magnetically separated to yield a mixture containing cathode sheet, anode sheet, separator and residual electrolyte; the mixture is dispersed into the separation liquid under dynamic stirring to obtain a slurry; the separator is removed by flotation, and residual slurry is sieved to isolate graphite anode particles from a mixture of current collector fragments and cathode fragments; and the oversize fraction is subjected to wet screening, and the undersize fraction is dried and crushed.

## Description

### TECHNICAL FIELD

This application relates to spent lithium-ion battery recycling, and more particularly to a separation liquid and a method for recovery of a metal-inorganic composite electrode assembly.

### BACKGROUND

Conventional techniques for recycling valuable components from spent lithium-ion batteries face the following challenges.

Hydrometallurgical and pyrometallurgical methods are limited by environmental pollution and unsatisfactory efficiency. Specifically, the hydrometallurgy process relies on strong acids or bases for dissolution, which will be accompanied by serious equipment corrosion and generation of heavy metal-containing wastewater. For example, the sodium hydroxide treatment described in Chinese patent publication No. 109004306A introduces high hydrogen gas explosion risks. Pyrometallurgy requires high-temperature calcination, which will cause high energy consumption. Moreover, the pyrometallurgical technology is only suitable for recovery of low-purity metal oxides, and fails to be applied to the treatment of organic materials. These two processes both suffer from serious secondary pollution risks.

Some organic solvent-based method features excellent economic efficiency, but it also suffers from potential environmental risks. Though solvents like N-methyl-2-pyrrolidone (NMP) can dissolve binders such as polyvinylidene fluoride (PVDF), they are too costly. Moreover, the residual solvent on current collectors necessitates intensive post-treatment, which will increase the organic waste discharge. As noted in Chinese patent publication No. 109713393A, the resultant mixed material requiring complex separation operation.

Mechanical crushing and pyrolysis technologies exhibit critical shortcomings. Mechanical crushing frequently introduces metal contaminants, for instance, aluminum levels exceeding 200 ppm, which degrade material reuse value. The pyrolysis reaction requires high temperature to degrade the binders, which will result in discharge of toxic gases like hydrogen fluoride (as disclosed in Chinese patent publication No. 106505271A) and high exhaust gas treatment cost.

Conventional separating agents struggles with poor selectivity. Traditional acidic or alkaline reagents will trigger violent reaction, thereby corroding current collectors (e.g., dissolving aluminum foil) and damaging active component structures. Multi-stage treatment procedures are often required. Chinese patent publication No. 116136022A describes a three-stage stripping process, which struggles with the generation of sulfur-containing wastewater and poor economic efficiency.

Current processes suffer from poor compatibility and apparent intelligence shortcomings. There are diverse battery chemistry systems, including ternary, lithium iron phosphate and solid-state systems, but there is a lack of flexible compatibility therebetween. The dependence on manual disassembly critically limits the treatment efficiency. Furthermore, it still fails to effectively recycle smart components such as embedded sensors or self-healing materials, leading to significant resource loss.

### SUMMARY

There is an urgent need to develop a mild, efficient and highly-selective green separation agent and an intelligent process to address the technical problems in the prior art, such as low recovery rate (difficult to preserve aluminum/copper foil), high pollution risk, cumbersome process and poor cost-effectiveness, so as to achieve efficient collection and regeneration of high-value components from battery cells. In this regard, the present disclosure provides a separation liquid and a method for recovery of a metal-inorganic composite electrode assembly.

The present disclosure adopts the following technical solutions.

A separation liquid, comprising:
an active component; and
95% or more by weight of deionized water;
wherein the separation liquid has a pH of 0.5-2; and
the active component is composed of oxalic acid and acetic acid in a weight ratio of 1:10-20.

In some embodiments, the separation liquid further comprises polyethylene glycol.

In some embodiments, a weight percentage of the polyethylene glycol in the separation liquid is 0.01%-0.1%.

In some embodiments, the separation liquid has a pH of 0.7-0.9.

In some embodiments, the present disclosure provides a method for recovery of a metal-inorganic composite electrode assembly by using the aforementioned separation liquid, and the method comprises:
(S1) dismantling a spent lithium-ion battery to collect a battery cell;
(S2) subjecting the battery cell to crushing and magnetic separation to obtain a mixed material containing a positive electrode plate, a negative electrode plate, a separator and residual electrolyte;
(S3) dispersing the mixed material into the separation liquid followed by dynamic stirring until a positive electrode coating is separated from an aluminum foil, so as to obtain a slurry, wherein the dynamic stirring is performed to maintain a turbulent flow condition;
(S4) removing the separator from the slurry by overflow weir flotation;
(S5) sieving remaining slurry to obtain a first undersize fraction and a first oversize fraction, wherein the first undersize fraction is graphite negative electrode particles, and the first oversize fraction is a mixture of current collector fragments and positive electrode fragments; and washing and drying the first undersize fraction; and
(S6) subjecting the first oversize fraction to wet screening to obtain a second undersize fraction and a second oversize fraction, wherein the second undersize fraction is the positive electrode fragments, and the second oversize fraction is the current collector fragments; and drying and crushing the second undersize fraction to recover positive electrode material.

In some embodiments, step (S1) is performed through steps of:
discharging the spent lithium-ion battery to a voltage of 1 V or less;
cutting a casing of the spent lithium-ion battery; and
mechanically isolating the battery cell from the spent lithium-ion battery under nitrogen protection with an oxygen content of less than 5%.

In some embodiments, step (S2) is performed through steps of:
crushing the battery cell with a twin-shaft shredder to produce crude fragments having a size of 100-200 mm; and
removing magnetic metal particles from the crude fragments via magnetic separation to obtain the mixed material.

In some embodiments, in step (S3), a weight ratio of the mixed material to the separation liquid is 1:3-5.

In some embodiments, in step (S3), the dynamic stirring is performed at a temperature of 25-35°C and a speed of 100-300 rpm for 1-2 min.

In some embodiments, the temperature of the dynamic stirring is 29-31°C.

In some embodiments, in step (S5), the remaining slurry is sieved through a screen with a mesh aperture of 1 mm.

In some embodiments, in step (S6), the wet screening is performed through a screen with a mesh aperture of 10-20 mm.

The present disclosure has the following beneficial effects.

The separation liquid employs a composed system of oxalic acid and acetic acid. Oxalic acid serves as a primary component, where its carboxyl groups disrupt chemical bonds of the binder in the electrode materials (e.g., C-F bonds in polyvinylidene fluoride (PVDF)) and chelate residual lithium salts (e.g., LiPF₆), facilitating detachment of the positive electrode active component from the current collector. The acidic environment (pH adjusted to 0.5 to 1.0) promotes passivation of the aluminum current collector, forming a protective layer that prevents excessive corrosion. Acetic acid functions as an inhibitor by adsorbing onto the surface of the copper current collector to form a protective film, reducing metal dissolution. Concurrently, acetate ions chelate dissolved copper ions in solution, and in accordance with Le Chatelier's principle, this complexation lowers the concentration of free Cu²⁺ ions, further suppressing copper loss. Polyethylene glycol (PEG), added as a dispersant, leverages differential surface chemistry and adsorption behavior between electrode materials and current collectors to enhance separation selectivity. Integration of this separation solution into the method of separating and recovering component for the metal-inorganic composite electrode assembly enables complete component separation at ambient temperature, reduces energy consumption by 70% compared to conventional high-temperature pyrolysis (above 500°C), and eliminates generation of toxic gases such as hydrogen fluoride, thereby achieving high process efficiency and environmental safety.

The positive electrode material exhibits a recovery rate exceeding 96%, with aluminum impurity content below 60 ppm, copper impurity content below 25 ppm, and current collector loss rate less than 1%.

The separation liquid remains effective for three reuse cycles with replenishment of 10% fresh separation liquid per cycle. The comprehensive processing cost is reduced to RMB 1,200 per ton of battery cells, representing a 40% cost reduction relative to conventional alkaline dissolution methods, and demonstrating significant economic viability.

### BRIEF DESCRIPTION OF THE DRAWINGS

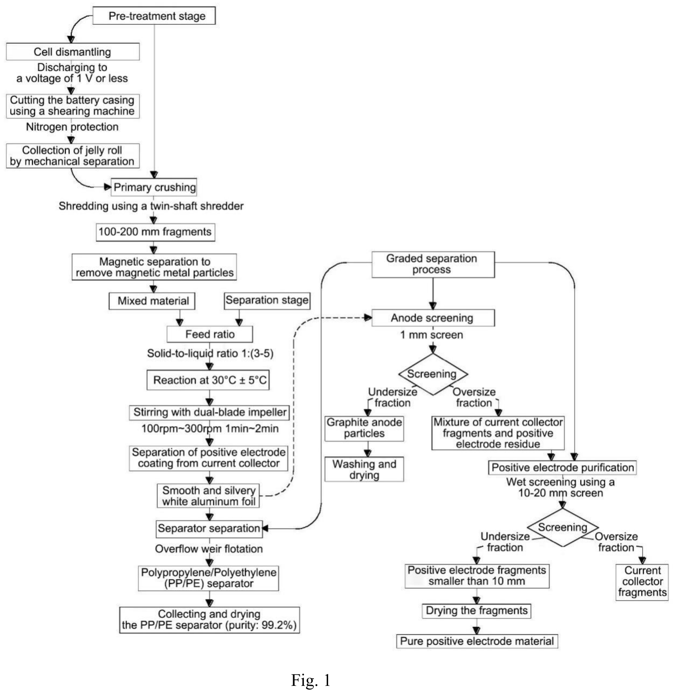

Fig. 1 is a flow chart of a method for recovery of a metal-inorganic composite electrode assembly according to an embodiment of the present disclosure;
Fig. 2 shows effects of a weight ratio of oxalic acid to acetic acid on impurity elements in the positive electrode in Example 1;
Fig. 3 depicts a correlation between dissolution rate and recovery rate with respect to acetic acid content in Example 1;
Fig. 4 is a scanning electron microscopy (SEM) image of lithium iron phosphate positive electrode recovered from Example 1;
Fig. 5 shows effects of a weight percentage of polyethylene glycol on positive electrode recovery rate in Example 2; and
Fig. 6 depicts a correlation between recovery rate and oxalic acid content in Example 3.

### DETAILED DESCRIPTION OF EMBODIMENTS

The principle and features of the present disclosure are further described in combination with the accompanying figures. The following examples are illustrative, and are not intended to limit this present disclosure.

### Example 1

In this example, the present disclosure provided a separation method based on an oxalic acid-acetic acid composed system.

A separation liquid included an active component and deionized water, where the active component was the oxalic acid-acetic acid composed system. The acetic acid had a weight percentage of 0.25%, whereas the oxalic acid was adjustable in terms of concentration to satisfy a weight ratio gradient of acetic acid to oxalic acid (i.e., 1:10-20). Ten experimental groups were prepared according to specific data shown in Table 1. Furthermore, a pH of the separation liquid was maintained at 0.7-0.9. The oxalic acid primarily provided an acidic environment.

The separation was performed through the following steps.

(S101) A spent lithium-ion battery was discharged to a voltage of 1 V or less. A casing of the spent lithium-ion battery was cut. A battery cell was mechanically isolated from the spent lithium-ion battery under nitrogen protection with an oxygen content of less than 5%.

(S102) The battery cell was crushed with a twin-shaft shredder to produce crude fragments having a size of 150 mm. Magnetic metal particles were removed from the crude fragments via magnetic separation to obtain a mixed material with a residual content of the magnetic metal particles below 0.5%, where the mixed material contained a positive electrode plate, a negative electrode plate, a separator and residual electrolyte.

(S103) The mixed material was dispersed into the separation liquid in a weight ratio of 1:3-5, followed by dynamic stirring until a positive electrode coating was separated from an aluminum foil, so as to obtain a slurry. The dynamic stirring was performed to maintain a turbulent flow condition, and was performed at 29-31°C and a speed of 100-300 rpm for 90 s. When the clean, silvery appearance of the aluminum foil surface was observed, the dynamic stirring was stopped.

(S104) The polypropylene/polyethylene (PP/PE) separator in the mixed material was removed from the slurry by overflow weir flotation, leveraging its low density (0.9 g/cm³ to 1.1 g/cm³). The PP/PE separator was collected and dried, achieving a purity of 99.2%.

(S105) Remaining slurry was sieved through a screen having a mesh aperture of 1 mm, so as to obtain a first undersize fraction and a first oversize fraction. The first undersize fraction was graphite negative electrode particles. The first oversize fraction was a mixture of current collector fragments and positive electrode fragments. The first undersize fraction was washed and dried.

(S106) The first oversize fraction was subjected to wet screening by a screen having a mesh aperture of 10-20 mm, so as to obtain a second undersize fraction and a second oversize fraction. The second undersize fraction was positive electrode fragments having a size smaller than 10 mm. The second oversize fraction was current collector fragments. The second undersize fraction was dried and crushed to recover a positive electrode material without impurities.

Purity and impurity content of all separated components were analyzed post-sieving, with results summarized in Table 1.

**Table 1 Correlation data between concentration gradient and impurity element content**

| Experimental group | Oxalic acid-acetic acid (weight ratio) | Aluminum dissolution rate (%) | Copper residue (ppm) | Aluminum residue (ppm) | Positive electrode recovery rate (%) |
|---|---|---|---|---|---|
| 1 | 1:20 | 0.8 | 20 | 55 | 98.5 |
| 2 | 1:18 | 1.2 | 25 | 40 | 98.2 |
| 3 | 1:16 | 1.5 | 20 | 50 | 97.9 |
| 4 | 1:14 | 2.1 | 30 | 45 | 97.3 |
| 5 | 1:12 | 2.8 | 30 | 50 | 96.8 |
| 6 | 1:11 | 3.5 | 40 | 35 | 96.1 |
| 7 | 1:10.5 | 4.2 | 60 | 30 | 95.4 |
| 8 | 1:10 | 5.0 | 55 | 35 | 94.7 |
| 9 | 1:9.5 | 6.1 | 75 | 30 | 93.9 |
| 10 | 1:9 | 7.3 | 90 | 45 | 93.0 |

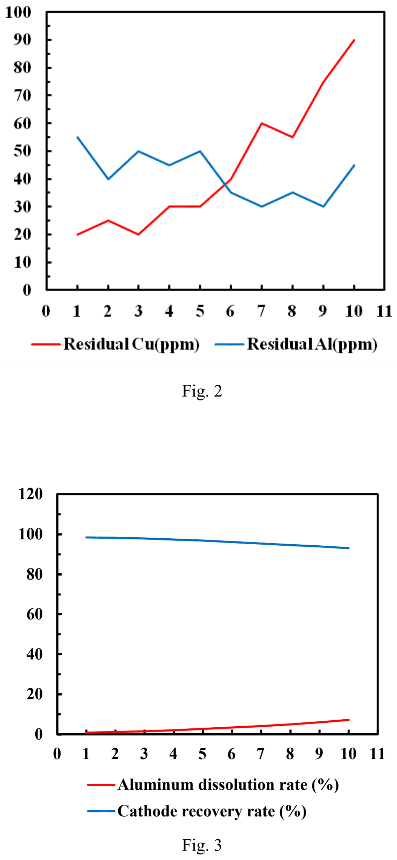

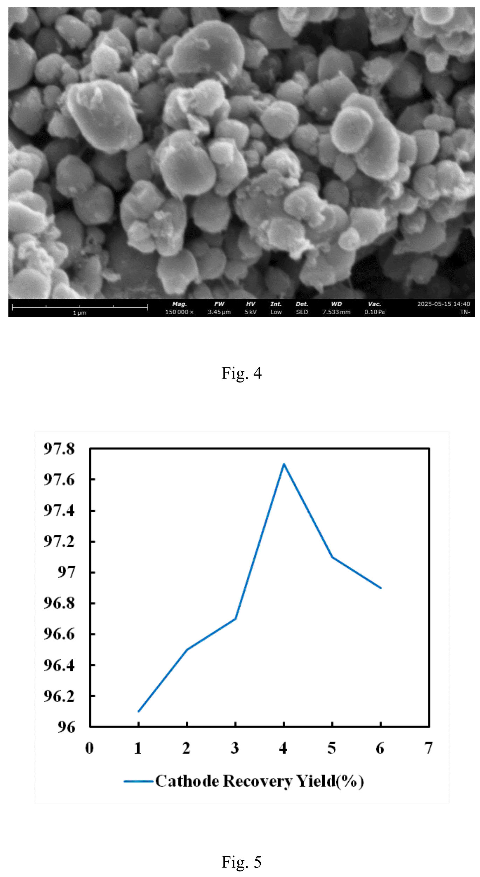

The effect of the weight ratio of oxalic acid to acetic acid on impurity elements in the positive electrode was shown in Fig. 2. The horizontal axis was labeled as the serial number of experimental group (indirectly corresponding to varying weight ratios of oxalic acid to acetic acid), and the vertical axis was defined as impurity content expressed in a unit of ppm. With respect to suppression of copper impurities and residual lithium in the positive electrode, optimal copper protection was achieved at a weight ratio of 1:20 (copper residue measured at 20 ppm). The mechanism was attributed to the formation of a stable complex between acetate ions and Cu²⁺ ions, such as Cu(CH₃COO)₂·2H₂O, thereby reducing the concentration of free Cu²⁺ ions. A minimal influence of the weight ratio of oxalic acid to acetic acid was observed on residual aluminum impurities in the positive electrode. A scanning electron microscopy (SEM) image of lithium iron phosphate positive electrode was shown in Fig. 4. It was confirmed that the morphology and particle size satisfied standard specifications for lithium iron phosphate positive electrode materials.

The correlation between dissolution rate and recovery rate relative to the serial number of experimental group (indirectly corresponding to varying weight ratios of oxalic acid to acetic acid) was shown in Fig. 3. Regarding dissolution behavior of the aluminum current collector, a significant increase in the aluminum dissolution rate was observed as the acetic acid proportion decreased (i.e., the weight ratio increased). At a weight ratio of 1:20, the aluminum dissolution rate was recorded as 0.8%; and at a weight ratio of 1:9, the rate was measured at 7.3%. It was concluded that the passivation protection effect of acetic acid on the aluminum current collector was diminished with decreasing acetic acid concentration.

The conclusions were summarized as follows.

The optimal weight ratio of oxalic acid to acetic acid was 1:20, at which superior comprehensive performance was achieved, with reduced aluminum and copper impurity levels in the positive electrode and a positive electrode purity of 98.5%.

A critical threshold was established. Specifically, accelerated dissolution of the copper current collector was observed when the weight ratio exceeded 1:11.

When economic considerations and recovery performance were jointly evaluated, a weight ratio of approximately 1:11 was deemed the most reasonable compromise.

### Example 2

In this example, the present disclosure provided a separation method based on the oxalic acid-acetic acid composed system and polyethylene glycol.

A separation liquid included an active component, deionized water and polyethylene glycol, where the active component was the oxalic acid-acetic acid composed system. The acetic acid had a weight percentage of 0.25%. The weight ratio of acetic acid to oxalic acid in the separation liquid was 1:11. Moreover, 0-0.1 wt.% polyethylene glycol 200 was added into the separation liquid as a dispersant. Six experimental groups were prepared according to specific data shown in Table 2. Furthermore, a pH of the separation liquid was maintained at 0.7-0.9. Furthermore, the oxalic acid primarily provided the acidic environment.

The separation was performed through the following steps.

(S201) The spent lithium-ion battery was discharged to a voltage of 1 V or less. The casing of the spent lithium-ion battery was cut. The battery cell was mechanically isolated from the spent lithium-ion battery under nitrogen protection with an oxygen content of less than 5%.

(S202) The battery cell was crushed with the twin-shaft shredder to produce crude fragments having a size of 150 mm. Magnetic metal particles were removed from the crude fragments via magnetic separation to obtain the mixed material with a residual content of the magnetic metal particles below 0.5%, where the mixed material contained the positive electrode plate, the negative electrode plate, the separator and the residual electrolyte.

(S203) The mixed material was dispersed into the separation liquid in a weight ratio of 1:3-5, followed by dynamic stirring until the positive electrode coating was separated from the aluminum foil, so as to obtain the slurry. The dynamic stirring was performed to maintain the turbulent flow condition, and was performed at 29-31°C and a speed of 100-300 rpm for 90 s.

(S204) The separator was removed from the slurry by overflow weir flotation.

(S205) The remaining slurry was sieved through a screen having a mesh aperture of 1 mm, so as to obtain the first undersize fraction and the first oversize fraction. The first undersize fraction was graphite negative electrode particles. The first oversize fraction was the mixture of current collector fragments and positive electrode fragments. The first undersize fraction was washed and dried.

(S206) The first oversize fraction was subjected to wet screening by a screen having a mesh aperture of 10-20 mm, so as to obtain the second undersize fraction and the second oversize fraction. The second undersize fraction was the positive electrode fragments having a size smaller than 10 mm. The second oversize fraction was the current collector fragments. The second undersize fraction was dried and crushed to recover the positive electrode material without impurities.

Purity and impurity content of all separated components were analyzed post-sieving, with results summarized in Table 2.

**Table 2 Correlation data between concentration gradient and impurity element content**

| Experimental group | Polyethylene glycol (wt.%) | Aluminum dissolution rate (%) | Copper residue (ppm) | Aluminum residue (ppm) | Positive electrode recovery rate (%) |
|---|---|---|---|---|---|
| 1 | 0 | 3.5 | 40 | 35 | 96.1 |
| 2 | 0.02 | 3.1 | 30 | 30 | 96.5 |
| 3 | 0.04 | 3.3 | 30 | 35 | 96.7 |
| 4 | 0.06 | 3.4 | 25 | 30 | 97.7 |
| 5 | 0.08 | 3.4 | 25 | 40 | 97.1 |
| 6 | 0.10 | 3.2 | 20 | 35 | 96.9 |

The effect of the weight percentage of the polyethylene glycol on the positive electrode recovery rate was shown in Fig. 5. The horizontal axis was labeled as the serial number of experimental group (indirectly corresponding to varying polyethylene glycol concentrations), and the vertical axis was the impurity content expressed in a unit of ppm. Based on data analysis, an improvement in the positive electrode recovery rate was observed. Specifically, when the weight percentage of the polyethylene glycol exceeded 0.06 %, the positive electrode recovery rate reached a maximum of 97.7%. A minimal influence of the weight percentage of the polyethylene glycol was noted on residual copper and aluminum impurity levels.

The conclusion was described that polyethylene glycol, added as a dispersant, enhanced separation efficiency among different components by leveraging differential adsorption mechanisms of polyethylene glycol on distinct material surfaces, thereby increasing the positive electrode recovery rate.

### Example 3

In this example, the present disclosure provided a separation method based on the oxalic acid-acetic acid composed system and polyethylene glycol.

A separation liquid included an active component, deionized water and polyethylene glycol, where the active component was the oxalic acid-acetic acid composed system. The weight ratio of acetic acid to oxalic acid in the separation liquid was 1-5: 11, indicating that the oxalic acid-acetic acid composed system was optimized to a high-proportion oxalic acid system. Five experimental groups were prepared according to specific data shown in Table 3. Furthermore, a pH of the separation liquid was maintained at 0.7-0.9. The oxalic acid primarily provided the acidic environment.

The separation was performed through the following steps.

(S301) The spent lithium-ion battery was discharged to a voltage of 1 V or less. The casing of the spent lithium-ion battery was cut. The battery cell was mechanically isolated from the spent lithium-ion battery under nitrogen protection with an oxygen content of less than 5%.

(S302) The battery cell was crushed with the twin-shaft shredder to produce crude fragments having a size of 150 mm. Magnetic metal particles were removed from the crude fragments via magnetic separation to obtain the mixed material with a residual content of the magnetic metal particles below 0.5%, where the mixed material contained the positive electrode plate, the negative electrode plate, the separator and the residual electrolyte.

(S303) The mixed material was dispersed into the separation liquid in a weight ratio of 1:3-5, followed by dynamic stirring until the positive electrode coating was separated from the aluminum foil, so as to obtain the slurry. The dynamic stirring was performed to maintain the turbulent flow condition, and was performed at 29-31°C a speed of 100-300 rpm for 90 s.

(S304) The separator was removed by overflow weir flotation.

(S305) The remaining slurry was sieved through a screen having a mesh aperture of 1 mm, so as to obtain the first undersize fraction and the first oversize fraction. The first undersize fraction was the graphite anode particles. The first oversize fraction was the mixture of current collector fragments and positive electrode fragments. The first undersize fraction was washed and dried.

(S306) The second oversize fraction was subjected to wet screening by a screen having a mesh aperture of 10-20 mm, so as to obtain the second undersize fraction and the second oversize fraction. The second undersize fraction was the positive electrode fragments having a size smaller than 10 mm. The second oversize fraction was the current collector fragments. The second undersize fraction was dried and crushed to recover the positive electrode material without impurities.

Purity and impurity content of all separated components were analyzed post-sieving, with results summarized in Table 3.

**Table 3 Correlation data between concentration gradient and impurity element content**

| Experimental group | Oxalic acid-acetic acid (weight ratio) | Aluminum dissolution rate (%) | Copper residue (ppm) | Aluminum residue (ppm) | Positive electrode recovery rate (%) |
|---|---|---|---|---|---|
| 1 | 1:11 | 3.5 | 40 | 35 | 96.1 |
| 2 | 2:11 | 4.3 | 45 | 40 | 95.3 |
| 3 | 3:11 | 4.1 | 35 | 55 | 94.9 |
| 4 | 4:11 | 3.8 | 40 | 45 | 95.0 |
| 5 | 5:11 | 3.9 | 45 | 40 | 94.2 |

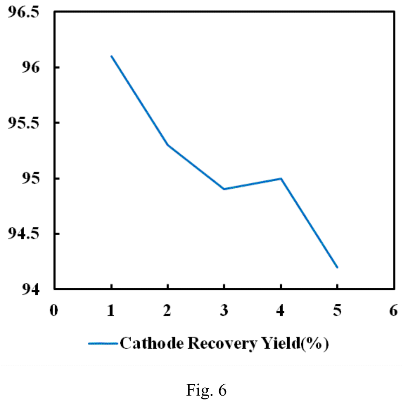

A correlation analysis graph was shown in Fig. 6, which illustrated the relationship between the positive electrode recovery rate and the experimental groups (indirectly corresponding to varying mass ratios of oxalic acid to acetic acid). It was observed that the positive electrode recovery rate gradually decreased as the proportion of oxalic acid increased. Additionally, the proportion of oxalic acid exerted negligible influence on the aluminum dissolution rate and the residual levels of aluminum and copper impurities in the positive electrode.

The conclusion was drawn that the acidity of oxalic acid accelerated the passivation reaction of the aluminum current collector, thereby forming a protective oxide layer to prevent excessive corrosion.

### Comparative example 1 Conventional hydrometallurgical method

The conventional hydrometallurgical method was performed through the following steps.

### (S401) Battery cell dismantling

The spent lithium-ion battery was discharged to a voltage of 1 V or less. The casing of the spent lithium-ion battery was cut by a shearing machine. The cell was mechanically isolated from the spent lithium-ion battery.

### (S402) Electrode plate separation

The positive electrode plate, the negative electrode plate and the separator were manually peeled off. The positive and negative electrode plates were torn into crude fragments having a size of approximately 50 mm.

### (S403) Dissolution

The positive electrode plate was dispersed in sodium hydroxide (NaOH) solution followed by dynamic stirring until the positive electrode plate was dissolved to obtain the slurry, where the dynamic stirring was performed at 75-85°C.

### (S404) Filtration and purification

The slurry was subjected to vacuum filtration by a Büchner funnel, followed by drying and sieving through a mesh screen to recover the positive electrode material without impurities.

**Table 4 Correlation data between concentration gradient and impurity element content**

| Experimental group | NaOH concentration (wt.%) | Aluminum dissolution rate (%) | Copper residue (ppm) | Aluminum residue (ppm) | Positive electrode recovery rate (%) |
|---|---|---|---|---|---|
| 1 | 5 | 93 | 1 | 15500 | 73.2 |
| 2 | 10 | 97 | 2 | 8500 | 76.1 |
| 3 | 15 | 98 | 4 | 4500 | 81.2 |
| 4 | 20 | 99 | 5 | 2500 | 87.1 |

As the concentration of the NaOH solution increased, the dissolution rate of the aluminum foil increased. The residual aluminum impurity content within the positive electrode reduced. The positive electrode recovery rate progressively increased.

The conclusion was drawn that the positive electrode recovery rate achieved by the conventional hydrometallurgical method exceeded 87%, which remained lower than that achieved by this application. Moreover, the conventional hydrometallurgical method had drawbacks of excessively high aluminum impurity content and lithium loss.

### Comparative example 2 N-Methyl-2-pyrrolidone (NMP) solvent method

The N-Methyl-2-pyrrolidone (NMP) solvent method was performed through the following steps.

### (S501) Battery cell dismantling

The spent lithium-ion battery was discharged to a voltage of 1 V or less. The casing of the spent lithium-ion battery was cut by the shearing machine. The cell was mechanically isolated from the spent lithium-ion battery.

### (S502) Electrode plate separation

The positive electrode plate, the negative electrode plate and the separator were manually peeled off. The positive and negative electrode plates were torn into crude fragments having a size of approximately 50 mm.

### (S503) Dissolution

The positive electrode plate was dispersed into N-methyl-2-pyrrolidone (NMP) followed by dynamic stirring until the positive electrode plate was dissolved to obtain a slurry, where the dynamic stirring was performed at 55-65°C.

### (S504) Centrifugal purification

The aluminum foil was collected from the slurry, and the remaining slurry was subjected to centrifugal separation. The resulting solid fraction was dried to obtain the positive electrode material.

The conclusion was drawn that, due to substantial dispersion of the positive electrode active material in NMP, the positive electrode extraction process was complex. The positive electrode recovery rate of 85% was lower than that achieved by this application. The aluminum impurity content reached 300 ppm, and the treatment cost of NMP-containing waste liquid was significantly elevated.

### Comparative example 3 High-temperature pyrolysis method

The high-temperature pyrolysis method was performed through the following steps.

### (S601) Battery cell dismantling

The spent lithium-ion battery was discharged to a voltage of 1 V or less. The casing of the spent lithium-ion battery was cut by the shearing machine. The cell was mechanically isolated from the spent lithium-ion battery.

### (S602) Electrode plate separation

The positive electrode plate, the negative electrode plate and the separator were manually peeled off. The positive and negative electrode plates were torn into crude fragments having a size of approximately 50 mm.

### (S603) High-temperature pyrolysis

The positive electrode plate was subjected to pyrolysis in a sintering furnace, so as to obtain a pyrolyzed mixture, where the pyrolysis was performed at 495-505°C for 2 h under a nitrogen atmosphere.

### (S604) Sieving and purification

The pyrolyzed mixture was crushed by a crusher, dried and sieved through a 100-mesh screen to obtain the positive electrode material.

The conclusion was drawn that hydrogen fluoride gas was released during the pyrolysis (concentration exceeding 15 ppm), so that the exhaust gas treatment costs were increased. The recovery rate of the positive electrode material was 75%.

**Table 5 Comparison of examples data and comparative example data**

| Indicator | Example 1 | Example 2 | Example 3 | Comparative example 1 | Comparative example 2 | Comparative example 3 |
|---|---|---|---|---|---|---|
| Recovery rate (positive electrode) | 97.9% | 97.7% | 96.1% | 87% | 85% | 75% |
| Aluminum impurity content (ppm) | 50 | 30 | 35 | 1200 | 300 | 1000 |
| Energy consumption (kWh/ton) | 50 | 50 | 50 | 180 | 220 | 400 |
| Treatment cost (RMB/ton) | 1180 | 1210 | 1190 | 2100 | 3500 | 2800 |

The conclusion was drawn that efficient separation of electrode components at ambient temperature was accomplished through the oxalic acid-acetic acid composed system and the graded separation process of this application. The positive electrode material recovery rate exceeding 96% was achieved, with the aluminum impurity content maintained below 60 ppm, the copper impurity content below 25 ppm and the current collector loss rate less than 1%. Furthermore, the treatment cost reduction of more than 40% was enabled, and the absence of secondary pollution was verified, thereby confirming that the method provided by this application had a significant superiority over conventional techniques.

Although the present disclosure has been described above with reference to the embodiments, it can be understood that these embodiments are merely exemplary and cannot be understood as limitations of the present disclosure. It should be noted that any changes, improvements, replacements and modifications made by those skilled in the art without departing from the spirit of the disclosure shall fall within the scope of the disclosure defined by the appended claims.

## Claims

1. A separation liquid, comprising:
an active component; and
95% or more by weight of deionized water;
**characterized in that** the separation liquid has a pH of 0.5-2; and
the active component is composed of oxalic acid and acetic acid in a weight ratio of 1:10-20.

2. The separation liquid of claim 1, further comprising:
polyethylene glycol.

3. The separation liquid according to claim 2 or 3, **characterized in that** a weight percentage of the polyethylene glycol in the separation liquid is 0.01%-0.1%.

4. The separation liquid according to any one of claims 1-3, **characterized in that** the separation liquid has a pH of 0.7-0.9.

5. A method for recovery of a metal-inorganic composite electrode assembly by using the separation liquid according to any one of claims 1-4, comprising:
(S1) dismantling a spent lithium-ion battery to collect a battery cell;
(S2) subjecting the battery cell to crushing and magnetic separation to obtain a mixed material containing a positive electrode plate, a negative electrode plate, a separator and residual electrolyte;
(S3) dispersing the mixed material into the separation liquid followed by dynamic stirring until a positive electrode coating is separated from an aluminum foil, so as to obtain a slurry, wherein the dynamic stirring is performed to maintain a turbulent flow condition;
(S4) removing the separator from the slurry by overflow weir flotation;
(S5) sieving remaining slurry to obtain a first undersize fraction and a first oversize fraction, wherein the first undersize fraction is graphite negative electrode particles, and the first oversize fraction is a mixture of current collector fragments and positive electrode fragments; and washing and drying the first undersize fraction; and
(S6) subjecting the first oversize fraction to wet screening to obtain a second undersize fraction and a second oversize fraction, wherein the second undersize fraction is the positive electrode fragments, and the second oversize fraction is the current collector fragments; and drying and crushing the second undersize fraction to recover positive electrode material.

6. The method according to claim 5, **characterized in that** step (S1) is performed through steps of:
discharging the spent lithium-ion battery to a voltage of 1 V or less;
cutting a casing of the spent lithium-ion battery; and
mechanically isolating the battery cell from the spent lithium-ion battery under nitrogen protection with an oxygen content of less than 5%.

7. The method according to claim 5, **characterized in that** step (S2) is performed through steps of:
crushing the battery cell with a twin-shaft shredder to produce crude fragments having a size of 100-200 mm; and
removing magnetic metal particles from the crude fragments via magnetic separation to obtain the mixed material.

8. The method according to claim 5, **characterized in that** in step (S3), a weight ratio of the mixed material to the separation liquid is 1:3-5.

9. The method according to claim 8, **characterized in that** in step (S3), the dynamic stirring is performed at a temperature of 25-35°C and a speed of 100-300 rpm for 1-2 min.

10. The method according to claim 9, **characterized in that** the temperature of the dynamic stirring is 29-31°C.
